(19) Europäisches Patentamt
European Patent Office
Office européen des brevets

(11) **EP 2 355 589 A1**

(12) **EUROPEAN PATENT APPLICATION**

(43) Date of publication:
**10.08.2011  Bulletin 2011/32**

(51) Int Cl.:
**H04W 48/20** (2009.01)

(21) Application number: **10305096.9**

(22) Date of filing: **28.01.2010**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA RS**<br><br>(71) Applicant: **ST-Ericsson SA**<br>**1228 Plan-les-Ouates (CH)** | (72) Inventor: **Sfar, Safouane**<br>**72000, LE MANS (FR)**<br><br>(74) Representative: **Verdure, Stéphane et al**<br>**Cabinet Plasseraud**<br>**52 rue de la Victoire**<br>**75440 Paris Cedex 09 (FR)** |

(54) **Cell selection and reselection in a telecommunication network**

(57)  A method for performing a selection or a reselection of a cell of an UMTS or LTE network, based on a parameter taking into account a traffic load level of the cell.

FIG.2.

EP 2 355 589 A1

## Description

### Technical Field

The present invention relates to the management of cell selection and reselection in telecommunication networks such as UMTS or LTE networks.

### Background of the invention

In Universal Mobile Telecommunications System (UMTS) networks and Long term Evolution (LTE) networks, a terminal which tries to camp on a cell of the network performs a series of measurements for choosing a best cell to camp on.
Documents TS 25.304 and TS 36.304 of the 3rd Generation Partnership Project (3GPP) standard specification define conditions for and procedures of the selection and reselection of cell of a network.

### Prior art

The cell selection and reselection operations are based on the comparison of quality parameters (such as the power of the signals in the cells) with thresholds according to determined criteria.
When a terminal determines that the parameters of a cell fulfil the criteria (for determining that quality is acceptable) and when a user of the terminal tries to make a call for example, the terminal sends connection messages to a management unit of the network such as a base station BS (the NodeB for a UMTS network or the eNodeb for an LTE network). The management unit then accepts or rejects the connection. In case the management unit rejects the connection, the terminal may search for another cell to camp on.
The connection rejection may be caused by the fact that there is congestion on the cell. For example, the network may then temporarily prevent access to a cell for maintenance or traffic load reasons. The cell in this case may be barred by the network.
The repetition of unsuccessful connection attempts takes time and consumes uselessly power of the terminal.
In the prior art, the terminal has no means for avoiding trying selecting, reselecting, or connecting to congested cells.

### Summary of the invention

There is still a need for improving the management of cell selection and reselection in UMTS and LTE networks.
To that end there is provided, according to a first aspect of the invention, a method for performing a selection or a reselection of a cell of an UMTS or LTE network, comprising the steps of:

- performing a quality measurement in a cell of the network;

- reading information representing a state of load of the cell, said information being broadcasted by a management unit of the network;

- computing a parameter based on a result of the quality measurement performed and taking into account the information representing the state of load of the cell; and

- selecting or reselecting the cell based on the computed parameter.

Hence, when deciding to select or reselect a cell, the terminal has information on the state of load of the cell. In case the cell is heavily loaded, the terminal may avoid camping on the cell because it has a great probability of being already barred or to be barred in the next moments due to a congestion on the cell. The terminal then avoids initiating a connection with the base station (for performing a call for example) that will be rejected because of a congestion of the cell.
With the present invention, unsuccessful selections and reselections are avoided or at least significantly reduced which results in power saving in the terminal, and in a faster selection or reselection procedure.
For example, the parameter is compared to a threshold.
The information representing the state of load of the cell may be read in the broadcasted System Block Information (SIB) broadcasted by a management unit of the network.
For example, the traffic load is determined based on an occupation of a bandwidth available in the cell.

Alternatively, the traffic load is determined based on a number of ongoing communications in the cell.

According to other aspects of the invention, there is also provided:

- a computer program comprising instructions for executing a method according to the first aspect when the program is executed by a processor;

- a computer program product for storing the computer program; and

- a terminal for implementing a method according the first aspect.

These objects provide at least the same advantages as those associated to the method.

Other advantages are obtained by additional features which are recited in the dependent claims attached hereto.

**Brief description of the drawings**

Other features and advantages of the invention will become apparent from the following description of non-limiting exemplary embodiments, with reference to the appended drawings, in which:

- Figure 1 is a schematic illustration of a context of implementation of embodiments of the invention;
- Figure 2 illustrates a cell selection (or reselection) according to an embodiment of the invention;
- Figure 3 is a schematic illustration of a terminal according to embodiments of the present invention.

**Detailed description of embodiments of the invention**

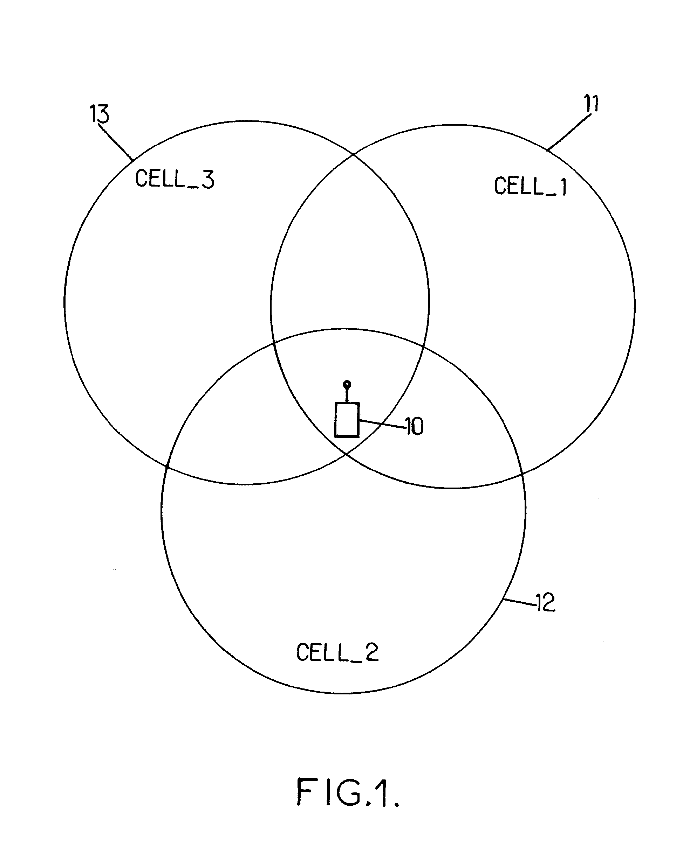

Figure 1 illustrates a context of implementation of embodiments of the invention. A mobile telecommunication device 10 is in the coverage of three different cells 11, 12, and 13 of a telecommunication network. The network may be an UMTS or an LTE network.

In order to decide on which cell it will camp on, the terminal performs a series of measurements and checks the fulfilment of some criteria. The terminal camps on a cell when it has selected it and tuned to the cell's control channel.

The terminal may have been activated under the coverage of cells 11, 12, and 13 and may then search for a cell to camp on (selection case), or it may already camp on one of the cells (for example cell 11) and searching for a better cell to use (re-selection case).

For a cell selection (when the terminal tries to camp on a cell), for an UMTS network, the terminal checks the following criteria:

- *NewSrxlev > 0 and Squal > 0 for Frequency Division Duplex (FDD) cells, or*

- *NewSrxlev > 0 for Time Division Duplex (TDD) cells.*

where:

- NewSrxLev = Qrxlevmeas - Qrxlevmin - Pcompensation - Q1NwLoad ,
- Squal = Qqualmeas - Qqualmin ,
- Squal: Cell Selection quality value (dB).
- Srxlev: Cell Selection RX level value (dB).
- Qqualmeas: Measured cell quality value. The quality of the received signal expressed in CPICH Ec/N0 (dB) for FDD cells.
- Qrxlevmeas: Measured cell RX level value. This is received signal, CPICH RSCP for FDD cells (dBm) and P-CCPCH RSCP for TDD cells (dBm).
- Qqualmin: Minimum required quality level in the cell (dB).
- Qrxlevmin: Minimum required RX level in the cell (dBm).
- Pcompensation: max(UE_TXPWR_MAX_RACH - P_MAX, 0) (dB).
- UE_TXPWR_MAX_RACH: Maximum TX power level a terminal may use when accessing the cell on RACH (read in system information) (dBm).
- P_MAX: Maximum RF output power of the terminal (dBm).

In an embodiment of the present invention, the state of load of the cell is taken into account. A new parameter NewSrxlev is defined as follows:

NewSrxlev = Srxlev - Q1 NwLoad, where

Q1 NwLoad is a parameter measuring the state of load of the cell.

The parameter Q1 NwLoad may be computed as follows:

$$Q1NwLoad\ (in\ dB) = 60.\frac{TRUNC(\dfrac{OccupiedBandwidth}{TotalBandwidth}.10)}{10},$$

where OccupiedBandwidth is the bandwidth currently used for service executions in the cell, and TotalBandwidth is the total bandwidth which can be provided by the cell.

For a cell selection, for an LTE network, the terminal checks the following criteria:

- *NewSrxlev >0,* where
- NewSrxLev= Qrxlevmeas- (Qrxlevmin- Qrxlevminoffset)- Pcompensation - Q1NwLoad,
- Qrxlevmeas: Measured cell RX level value. This is received signal, CPICH,
- RSCP for FDD cells (dBm) and P-CCPCH RSCP for TDD cells (dBm).
- Qrxlevmin: Minimum required RX level in the cell (dBm),
- QrxlevminOffset: Offset to the signalled Qrxlevmin,
- Pcompensation: max(UE_TXPWR_MAX_RACH - P_MAX, 0) (dB),
- UE_TXPWR_MAX_RACH: Maximum TX power level an terminal may use when accessing the cell on RACH (read in system information) (dBm),
- P_MAX: Maximum RF output power of the terminal (dBm), and

Q1 NwLoad is the same as in the UMTS case.

For a cell re-selection (when the terminal was previously camping on a cell), for an UMTS or LTE network, the terminal ranks the neighbouring cell according the following parameters:

- NewRs = $Q_{meas,s}$ + $Q_{hysts}$ - Q2NwLoad, and

- NewRn = $Q_{meas,n}$- $Q_{offset,s,n}$ - Q2NwLoad, where

- $Q_{meas,s}$ is a quality parameter measured in the current cell (for example the RSCP parameter),

- $Q_{hyst}$ is a hysteresis value,

- $Q_{meas,n}$ is a quality parameter measured in the neighbouring cell, and

- $Q_{offset,s,n}$ is an offset value between the current cell and the neighbouring cell.

In an embodiment of the present invention, the state of load of the cell is taken into account, through the parameter Q2NwLoad. This parameter may be defined identically as Q1 NwLoad.

In the present embodiment new parameters NewSrxlev, NewRn and NewRs that take into account a state of load of the cells have been defined.

The way these parameters are used in the cell selection and reselection procedures may be the same as the procedures (using the old parameters) already defined in the 3GPP standard specification to which the person with ordinary skill in the art may refer.

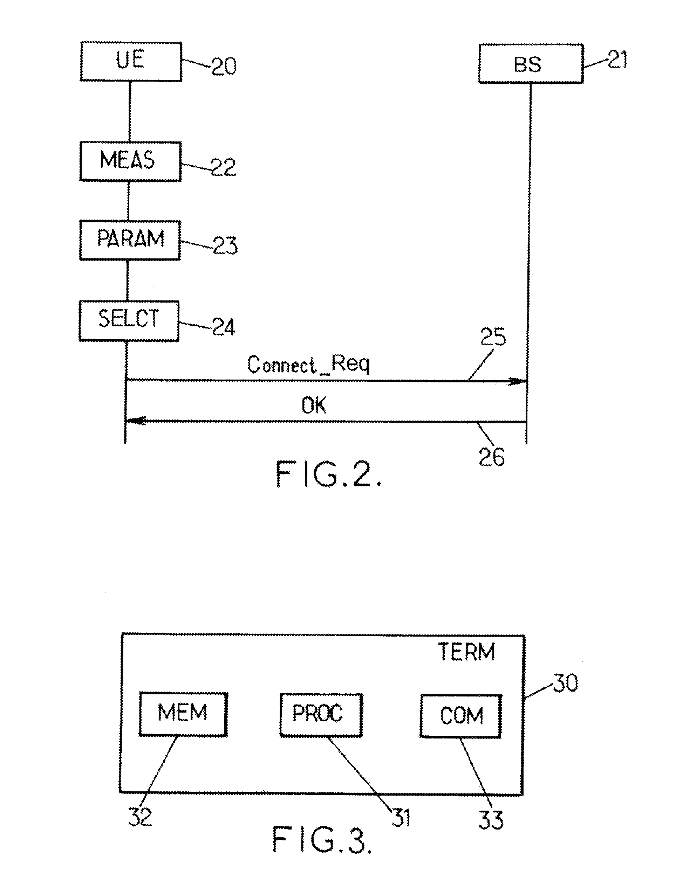

Figure 2 illustrates a cell selection (or reselection) according to an embodiment of the invention.

A terminal 20, which is under the coverage of several cells of a telecommunication network, performs a series of measurements in the cells. The measurements are performed during step 22. The terminal performs quality measurements on the signals of the cells. During this step, the terminal also reads information broadcasted by a management unit 21 of the network such as the base station of the cell. The information broadcasted concern a state of load of the cells. This information may be read in the SIB.

Then, in step 23, the terminal computes parameters for deciding on which cell it will camp on. The parameters determined have already been described above. The selection (or reselection) decision is made in step 24, by comparing the parameters determined to thresholds. After this step, the terminal has selected a cell to camp on.

Optionally, the terminal may then send a connection message 25 on the selected cell, for example a registration or a connection when user tries to initiate a communication. The cell then sends a message 26 for accepting or rejecting the connection. In case the connection is rejected, the terminal may return to step 22.

A computer program comprising instructions for executing the steps of the method described above may be designed based on an algorithm derived from the general flowchart depicted in Figure 2 and the present description.

Referring to Figure 3, a mobile communication terminal 30 according to the present invention is described. The device comprises a processing unit 31 for implementing a method according to embodiments of the invention. To that purpose, the device comprises a memory unit 32. The memory unit may comprise several types of memory. For example, the memory unit may comprise a memory for storing processing data. The memory unit may also comprise a memory for storing a computer program according to embodiments of the invention. The device also comprises a communication unit 33 for performing communications over the network.

While the invention has been illustrated and described in details in the drawings and foregoing description, such illustration and description are to be considered illustrative and exemplary only, the invention being not restricted to the disclosed embodiments. Other variations to the disclosed embodiments can be understood and effected by those skilled in the art in practicing the claimed invention, from a study of the drawings, the disclosure and the appended claims.

In the claims, the word "comprising" does not exclude other elements or steps, and the indefinite article "a" or "an" does not exclude a plurality. A single processor or other unit may fulfil the functions of several items recited in the claims. The mere fact that different features are recited in mutually different dependent claims does not indicate that a combination of these features cannot be advantageously used. Any reference signs in the claims should not be construed as limiting the scope of the invention.

**Claims**

1. A method for performing a selection or a reselection of a cell of an UMTS or LTE network, comprising the steps of:

   - performing a quality measurement (22) in a cell of the network;
   - reading information representing a state of load of the cell, said information being broadcasted by a management unit of the network;
   - computing a parameter (23) based on a result of the quality measurement performed;
   - selecting or reselecting the cell (24) based on the computed parameter; and wherein the parameter takes into account the information representing the state of load of the cell.

2. The method according to claim 1, wherein the information representing the state of load of the cell is read in the broadcasted System Block Information.

3. The method according to any one of the preceding claims, wherein the parameter takes into account an occupation of a bandwidth available in the cell.

4. The method according to any one of the preceding claims, wherein the parameter takes into account a number of ongoing communications in the cell.

5. A computer program comprising instructions for implementing the steps of a method according to any one of claims 1 to 4 when loaded and run on computer means of a mobile telecommunication terminal.

6. A mobile telecommunication terminal comprising:

   - a control unit (31) for performing a selection or a reselection of a cell of an UMTS or LTE network; and
   - a communication unit (33) for performing communications over the network; wherein the control unit is configured for performing a selection or a reselection according to any one of claims 1 to 4.

13

11

CELL_3

CELL_1

10

12

CELL_2

FIG.1.

FIG.2.

FIG.3.

**EUROPEAN SEARCH REPORT**

Application Number

EP 10 30 5096

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/112255 A2 (INTERDIGITAL TECH CORP [US]; SOMASUNDARAM SHANKAR [US]; SAMMOUR MOHAMM) 18 September 2008 (2008-09-18) <br> * abstract * <br> * paragraphs [0008], [0009], [0013], [0047], [0058] - [0074] * <br> * claims 1-14 * <br> ----- | 1-6 | INV. <br> H04W48/20 |
| X | US 2009/190500 A1 (JI TINGFANG [US] ET AL) 30 July 2009 (2009-07-30) <br> * abstract * <br> * figure 3 * <br> * paragraphs [0009], [0032] - [0040], [0042] * <br> ----- | 1-6 | |
| A | WO 2007/144029 A1 (ERICSSON TELEFON AB L M [SE]; NYLANDER TOMAS [SE]; HALLENSTAAL MAGNUS) 21 December 2007 (2007-12-21) <br> * the whole document * <br> ----- | 1-6 | |
| | | | TECHNICAL FIELDS SEARCHED (IPC) |
| | | | H04W |

The present search report has been drawn up for all claims

| Place of search | Date of completion of the search | Examiner |
|---|---|---|
| Munich | 14 April 2010 | Patras, Paula Larisa |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 30 5096

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2010

| Patent document cited in search report | | Publication date | Patent family member(s) | | Publication date |
|---|---|---|---|---|---|
| WO 2008112255 | A2 | 18-09-2008 | AR | 065711 A1 | 24-06-2009 |
| | | | AU | 2008226789 A1 | 18-09-2008 |
| | | | CA | 2681004 A1 | 18-09-2008 |
| | | | CN | 101637048 A | 27-01-2010 |
| | | | EP | 2137996 A2 | 30-12-2009 |
| | | | KR | 20090130293 A | 22-12-2009 |
| | | | US | 2008227453 A1 | 18-09-2008 |
| US 2009190500 | A1 | 30-07-2009 | WO | 2009097500 A1 | 06-08-2009 |
| WO 2007144029 | A1 | 21-12-2007 | EP | 2036376 A1 | 18-03-2009 |
| | | | US | 2010061337 A1 | 11-03-2010 |